# FASCICULE DE BREVET EUROPEEN

(11) **EP 2 241 480 B1**
(45) Date de publication et mention de la délivrance du brevet: **08.05.2013**
(21) Numéro de dépôt: 10305242.9
(22) Date de dépôt: 12.03.2010
(51) Int. Cl.: B60R 19/34

(54) **Face avant de véhicule automobile avec platines de support de grandes tailles pour absorbeurs de chocs, et véhicule associé**
Kraftfahrzeugvorderbau mit grossem Stossstangestützplatinen
Front end of a motor vehicle with large size support brackets

(30) Priorité: 17.04.2009 FR 0952535
(43) Date de publication de la demande: 20.10.2010
(73) Titulaire: Faurecia Bloc Avant, 92000 Nanterre (FR)
(72) Inventeur: Gonin, Vincent, 25600 Sochaux (FR); Droz-Bartholet, Laurent, 70400 Hericourt (FR)
(74) Mandataire: Blot, Philippe Robert Emile

(56) Documents cités:
- EP-A1- 1 293 389
- EP-A1- 1 942 033
- WO-A1-2007/011238
- FR-A1- 2 895 341

## Description

La présente invention concerne en général la structure de la partie avant des véhicules automobiles.

Plus précisément, l'invention concerne selon un premier aspect une face avant de véhicule automobile, du type comprenant deux platines et deux absorbeurs de chocs "moyennes vitesses" fixés aux platines, chaque platine présentant verticalement une hauteur telle que des parties d'extrémités supérieure et inférieure de la platine sont susceptibles d'être conjointement situées verticalement au niveau d'extrémités avant respectivement d'un longeron principal et d'un longeron inférieur du véhicule, les parties d'extrémités supérieure et inférieure de la platine étant susceptibles d'être conjointement rigidement fixées audit longeron principal et audit longeron inférieur.

Il est connu qu'un véhicule de tourisme présente une voie supérieure de reprise d'effort, comportant les longerons principaux du véhicule. Ces longerons sont des profilés métalliques de forte section, qui assurent la rigidité de la caisse du véhicule. Cette voie haute de reprise d'effort est souvent complétée par une voie basse de reprise d'effort, qui comprend les longerons inférieurs du véhicule. Ces longerons inférieurs sont rigidement fixés au berceau moteur et s'étendent vers l'avant à partir de celui-ci. Ils sont généralement métalliques, ou plus rarement plastiques.

De plus, le véhicule comprend fréquemment des liaisons métalliques entre les voies haute et basse, de manière à fermer la structure du véhicule et à apporter de la rigidité. Ces liaisons métalliques sont appelées "piliers" ou "pendeloques" ou encore "pendards". Elles sont généralement soudées aux longerons principaux et aux longerons inférieurs. Elles permettent par ailleurs d'améliorer l'acoustique vibratoire du véhicule.

Par ailleurs, FR-A-2 910 865 décrit une face avant d'un véhicule selon le préambule de la revendication 1. Les platines divulguées dans ledit état de la technique ne sont pas assez rigides pour servir de pilier et fermer la structure de caisse.

Dans ce contexte, l'invention vise à proposer une face avant de véhicule automobile dans laquelle la fermeture de la structure du véhicule et la fonction de support des absorbeurs en chocs soient assurées de manière simple.

A cette fin, l'invention porte sur une face avant du type précité, **caractérisée en ce que** chaque platine comporte une pluralité de cavités internes, chaque cavité interne étant délimitée perpendiculairement à la direction verticale par une paroi périphérique continue et entièrement fermée.

La face avant peut également présenter une ou plusieurs des caractéristiques ci-dessous, considérées individuellement ou selon toutes les combinaisons techniquement possibles :
- chaque cavité interne s'étend sur toute la hauteur de la platine ;
- chaque cavité interne est ouverte vers le haut et/ou vers le bas ;
- chaque platine est venue d'extrusion ;
- chaque platine est en aluminium extrudé ;
- chaque platine comporte une âme centrale et deux retours verticaux parallèles entre eux et solidaires de l'âme centrale, les deux retours délimitant entre eux une rainure de réception du longeron principal et du longeron inférieur s'étendant sur toute la hauteur de la platine ;
- l'âme centrale présente à l'opposée des deux retours une surface d'appui des absorbeurs de chocs « moyennes vitesses », et entre les deux retours une surface d'appui du longeron principal et du longeron inférieur ;
- certaines des cavités internes sont ménagées dans les retours ;
- la face avant comprend des organes de fixation des retours directement aux longerons principaux.

Selon un second aspect, l'invention porte sur un véhicule automobile comprenant des longerons principaux, des longerons inférieurs situés sous les longerons principaux, et une face avant présentant les caractéristiques ci-dessus, les platines de la face avant étant chacune rigidement fixée à l'un des longerons principaux et à l'un des longerons inférieurs.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue en perspective, éclatée, de la structure avant d'un véhicule automobile comportant une face avant conforme à l'invention ;
- la figure 2 est une vue en coupe horizontale d'une platine de la face avant de la figure 1, rapportée sur un longeron principal du véhicule ;
- la figure 3 est une vue en coupe horizontale similaire à celle de la figure 2, pour un longeron principal présentant une bride proéminente, la figure montrant en outre un absorbeur de chocs "moyennes vitesses" rigidement fixé à la platine ; et
- la figure 4 est une vue similaire à celle de la figure 3, pour une variante de réalisation dans laquelle la platine comporte une fixation pour un anneau d'arrimage ; et
- les figures 5 et 6 illustrent des faces avant alternatives.

Dans la description qui va suivre, la gauche, la droite, l'avant, l'arrière, les directions longitudinale et transversale sont entendus relativement au sens de déplacement normal du véhicule.

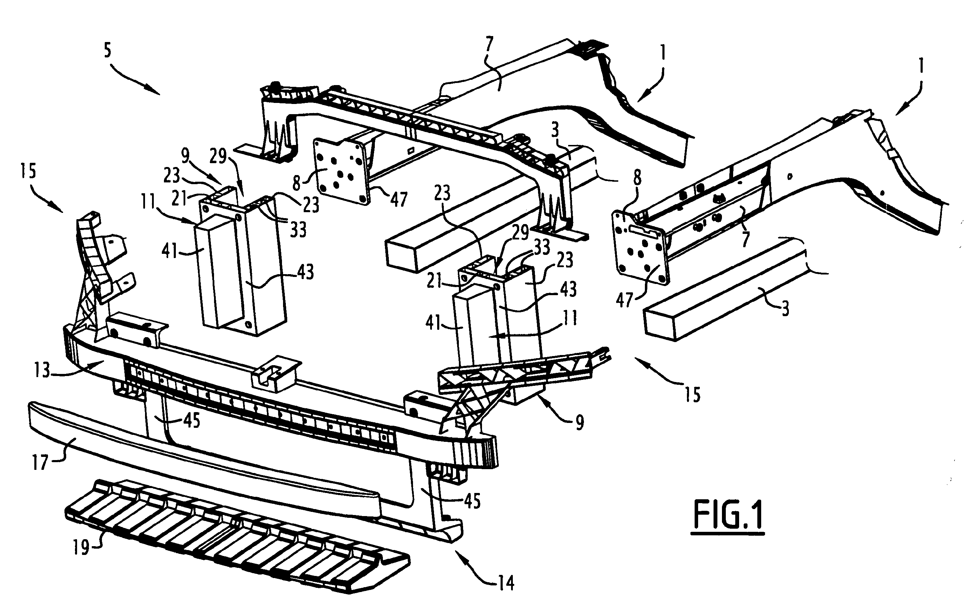

La figure 1 représente la structure de l'avant d'un véhicule automobile. Ce véhicule comporte deux longerons principaux 1, deux longerons inférieurs 3 et une face avant 5 rigidement fixée à la fois aux longerons principaux 1 et aux longerons inférieurs 3.

Chaque longeron principal 1 comporte un profilé métallique sensiblement rectiligne 7 et une bride 8 rigidement fixée au profilé 7. Le profilé 7 s'étend sensiblement longitudinalement. La bride 8 est fixée à une extrémité avant du profilé 7. Elle s'étend dans un plan vertical transversal.

Les longerons inférieurs 3 sont situés verticalement sensiblement sous les longerons principaux 1. Ils comportent des parties d'extrémité avant d'orientation sensiblement longitudinale. Les longerons inférieurs 3 sont solidaires, vers l'arrière, du berceau de réception du moteur du véhicule.

La face avant 5 comporte :
- deux platines 9 destinées à être rapportées aux longerons 1 et 3 ;
- deux absorbeurs de chocs "moyennes vitesses" 11 fixés aux platines 9 ;
- une poutre de pare-choc 13 ;
- un cadre 14 de réception d'un radiateur (non représenté) et d'autres équipements du véhicule tel qu'un groupe moto ventilateur (non représenté) ;
- des bras 15 de support des projecteurs avant (non représentés) du véhicule, rigidement fixés à la poutre 13 ;
- un absorbeur 17 prévu pour amortir les chocs piétons de type jambe, rigidement fixés le long d'une face frontale de la poutre 13 ; et
- un absorbeur 19 prévu pour amortir les chocs piétons de type jambe, rigidement fixé à une traverse inférieure du cadre 14.

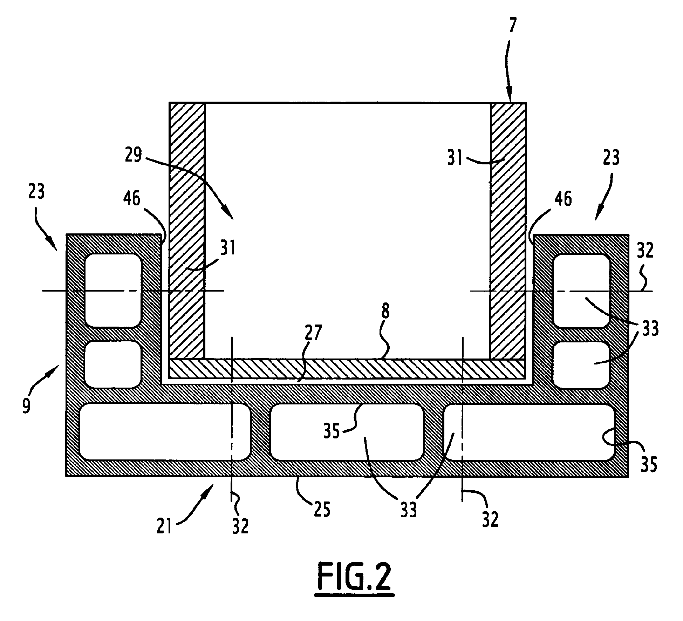

Les platines 9 sont chacune une pièce en aluminium venue d'extrusion. Elles présentent chacune une section constante perpendiculairement à la direction verticale, représentée sur la figure 2.

Chaque platine 9 comporte une âme centrale d'orientation sensiblement verticale et transversale, référencée 21, et deux retours 23 s'étendant vers l'arrière à partir de l'âme centrale. Les retours 23 s'étendent le long de deux bords verticaux opposés de l'âme centrale 21. Considérée en section horizontale, la platine présente donc une forme de U ouvert vers l'arrière du véhicule.

L'âme centrale 21 présente vers l'avant une surface 25 plane verticale d'appui des absorbeurs de choc 11.

Vers l'arrière, l'âme centrale 21 présente entre les deux retours 23 une surface 27 d'appui des longerons principaux et inférieurs. Cette surface 27 est verticale et transversale.

Les deux retours 23 s'étendent sur toute la hauteur de la platine 9. Ils définissent entre eux une rainure 29 de réception du longeron principal 1 et du longeron inférieur 3.

La platine 9 est de grande hauteur. La hauteur est choisie de telle sorte qu'une partie d'extrémité supérieure de la platine 9 soit située verticalement au niveau du longeron principal 1 correspondant, et qu'une partie d'extrémité inférieure de la platine 9 soit située verticalement au niveau du longeron inférieur 3 correspondant.

Le longeron principal 1 est engagé dans la rainure 29, sa bride 8 étant en appui et rigidement fixée à la surface 27 de la platine.

De même, le longeron inférieur 3 est engagé dans la rainure 29. Son extrémité avant est en appui contre la surface 27 et rigidement fixée à celle-ci.

Comme le montre la figure 2, les retours 23 sont disposés latéralement de part et d'autre du longeron principal 1, immédiatement le long de celui-ci. Les retours 23 sont rigidement fixés à des côtés latéraux 31 du profilé 7.

La bride 8 et les côtés latéraux 31 sont fixés respectivement à l'âme centrale et au retour de la platine par tous moyens adaptés. Par exemple, ils sont fixés par des vis 32, ou par une colle structurelle. Les vis 32 solidarisant la bride 8 à l'âme centrale 21 sont d'orientation longitudinale. Les vis 32 solidarisant les retours 23 aux côtés latéraux 31 sont d'orientation transversale. Les vis 32 sont symbolisées par des traits mixtes sur les figures 2 à 4.

Les platines 9 sont fixées de la même façon sur les longerons inférieurs 3.

Des cavités internes 33 sont ménagées dans la masse de chaque platine 9. Chaque cavité 33 s'étend verticalement sur toute la hauteur de la platine 9. Perpendiculairement à la direction verticale, chaque cavité 33 est délimitée par une paroi périphérique 35 continue et entièrement fermée. Ainsi, chaque cavité 33 est fermée à la fois vers l'avant, vers l'arrière et latéralement vers la droite et la gauche du véhicule.

Les cavités 33 en revanche sont ouvertes vers le haut et/ou vers le bas.

Les cavités 33, considérées en section perpendiculairement à la direction verticale, peuvent présenter toutes sortes de formes. Elles peuvent ainsi présenter une section carrée, rectangulaire, ronde etc.

Dans tous les cas, certaines des cavités 33 sont ménagées dans les retours 23, et d'autres cavités 33 sont ménagées dans l'âme centrale 21.

Dans l'exemple de réalisation de la figure 2, les cavités 33 ménagées dans l'âme centrale 21 sont de section rectangulaire allongée suivant la direction transversale.

Chaque retour 23 présente une cavité de section carrée, et une cavité de section rectangulaire allongée suivant la direction longitudinale.

Les parois périphériques 35 des cavités présentent une épaisseur comprise entre 1 et 4 mm, de préférence comprise entre 2 et 3 mm.

Chaque cavité, considérée en section perpendiculairement à la direction verticale, présente une section comprise entre 400 et 1600 mm², de préférence comprise entre 600 et 1000 mm². Le profil comporte une pluralité de ces cavités, dont le nombre est avantageusement compris entre 2 et 8 cavités (cf. schémas). Il est envisagé que les cavités soient disposées uniquement sur les parties latérales du profil, ce qui a pour effet d'affiner la partie frontale.

L'épaisseur de la platine, considérée longitudinalement pour l'âme centrale 21 et transversalement pour les retours 23, est comprise entre 12 et 35 mm, de préférence entre 15 et 25 mm. Dans le cas ou la partie frontale est constituée d'une seule âme dépourvue de cavités, son épaisseur pourra être comprise entre 3 et 10 mm, de préférence entre 4 et 6 mm.

L'absorbeur de chocs 11 est prévu pour les chocs de type « moyenne vitesse », c'est-à-dire pour un choc du véhicule à environ 15 km/h contre un mur rigide. Ces chocs génèrent un effort dans la structure du véhicule généralement compris entre 80 et 120 kN.

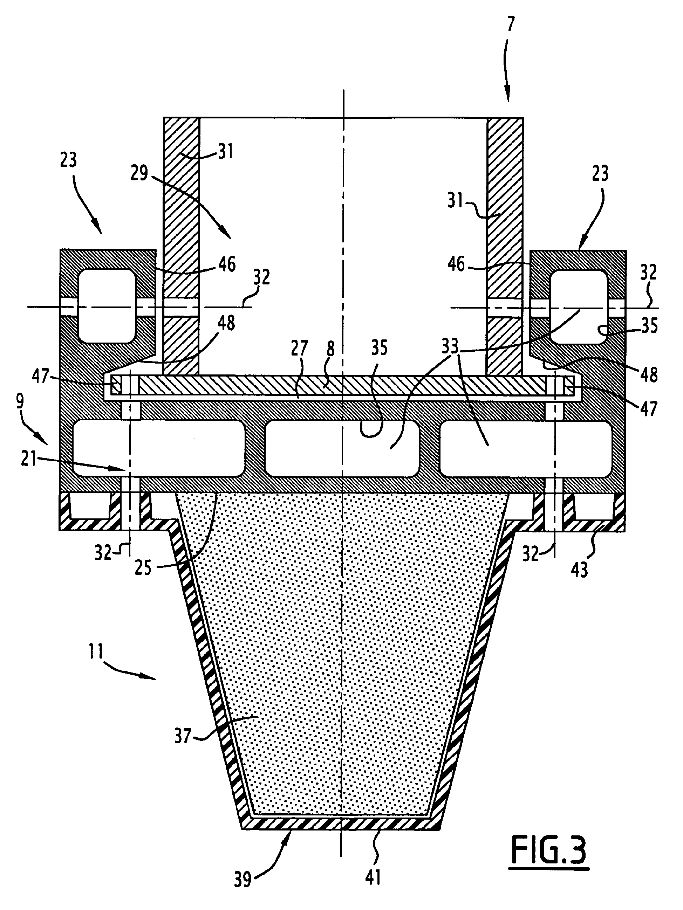

Dans un exemple de réalisation, chaque absorbeur de choc 11 comporte un bloc d'un matériau déformable 37 et une enveloppe en matière plastique 39 définissant un logement à l'intérieur duquel le bloc 37 est placé, comme visible sur la figure 3.

Le bloc 37 est réalisé en une mousse de polymère, ou en un polymère expansé. Ledit polymère peut être du polypropylène, du polystyrène, du polyuréthane ou tout autre polymère adapté. Alternativement, le bloc peut être réalisé en un matériau en nid d'abeilles, constitué d'un métal tel que l'aluminium, ou d'un polymère tel que ceux mentionnés ci-dessus. Le bloc 37 peut encore être réalisé en une mousse métallique, par exemple en mousse d'aluminium. Le bloc 37 présente, considéré en coupe perpendiculairement à la direction verticale, une forme trapézoïdale, la grande base du trapèze étant en appui sur la surface 25 de la platine. Le bloc 37 s'étend, verticalement, sur la plus grande partie de la hauteur de la platine 9.

L'enveloppe 39 comporte une partie centrale proéminente 41, définissant intérieurement un logement de forme correspondante à celle de la brique 37, et dans lequel la brique 37 est insérée. Elle comporte également une collerette périphérique 43, solidaire de la partie proéminente 41 et appliquée contre la surface d'appui 25 de la platine.

De tels dispositifs s'apparentent à des rampes d'absorption déjà décrites dans l'art antérieur, notamment par le brevet Faurecia FR0854027.

L'absorbeur de chocs comporte par ailleurs des moyens de fixation de l'absorbeur de chocs à la platine. Ces moyens sont par exemple des vis solidarisant la collerette 43 à l'âme centrale 21 de la platine. Ces vis peuvent être les vis 32 solidarisant la platine 9 à la bride 8. Ces moyens de fixation peuvent également être de la colle, la colle solidarisant le bloc 37 et/ou la collerette 43 de l'enveloppe à la surface d'appui 25.

Il est à noter que la surface d'appui 25 peut être intégralement plane, ou comporter des zones en relief ou en creux (nervures, glissières) destinées à caler en position les absorbeurs de chocs par rapport à la platine.

Dans le cas où la platine 9 est fixée par collage aux longerons, des nervures ou des pions sont formés sur la platine et/ou sur les longerons, de manière à garantir un écartement prédéterminé entre les surfaces respectives des longerons et de la platine à coller l'une sur l'autre. On contrôle ainsi de manière précise l'épaisseur de la couche de colle assurant la fixation de la platine aux longerons.

La poutre de pare-chocs 13 est fixée aux absorbeurs de chocs 11, les absorbeurs de chocs 11 étant interposés entre la poutre 13 et les longerons principaux 1.

Le cadre 14 est rapporté sur la poutre 13. Le cadre 14 comporte deux montants verticaux 45 s'étendant sous la poutre 13, en vis-à-vis de certaines zones des absorbeurs de chocs 11. Les montants 45 sont placés à l'avant des absorbeurs de chocs 11.

Dans la variante de réalisation représentée sur la figure 2, la bride 8 présente une forme correspondant sensiblement à la section du profilé 7. Dans ce cas, la bride 8 s'inscrit exactement dans le prolongement du profilé 7, et ne comporte pas de partie en saillie latéralement par rapport au profilé 7. La surface 27 de l'âme centrale de la platine et les faces internes 46 des retours 23 suivent exactement le contour de la bride 8 et des côtés latéraux 31 des longerons principaux, avec un faible écartement.

Dans la variante de réalisation représentée sur la figure 3, la bride est plus grande que la section du profilé 7. Ainsi, la bride 8 présente un bord périphérique 47 en saillie par rapport au profilé 7. Dans ce cas, les retours présentent deux logements 48 s'ouvrant vers l'intérieur de la rainure 29. Le bord en saillie 47 est inséré dans les logements 48. La surface 27 de l'âme est toujours à proximité immédiate de la face avant de la bride 8. Les faces internes 46 des retours restent en vis-à-vis et à proximité immédiate des côtés latéraux 31 des profilés 7.

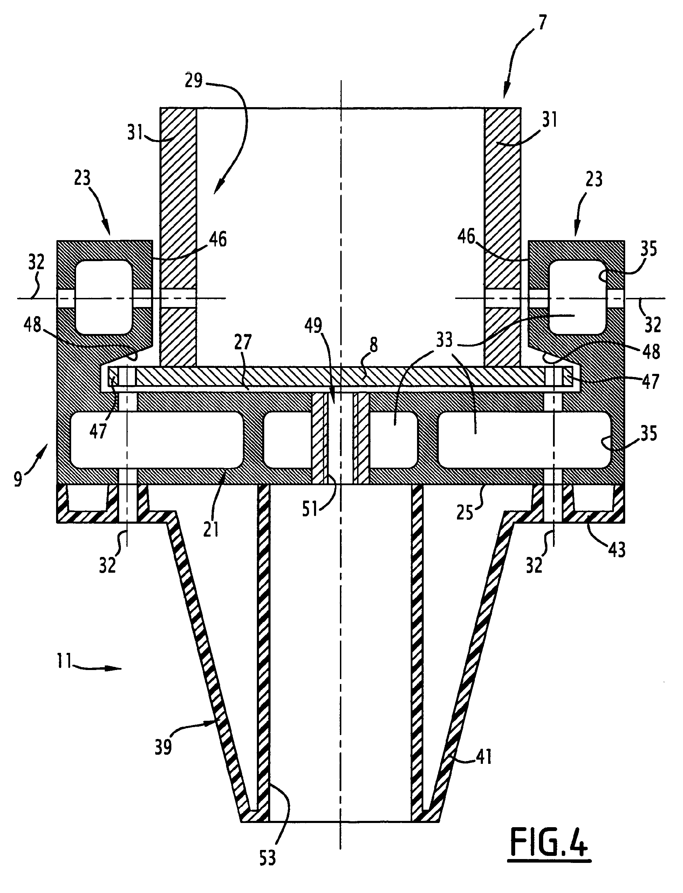

Dans une autre variante de réalisation représentée sur la figure 4, la platine 9 comporte un organe de fixation 49 pour un anneau d'arrimage. L'organe de fixation 49 est par exemple un fût cylindrique noyé dans la masse de la platine 9. Le fût cylindrique 49 comporte un trou central taraudé 51 d'orientation longitudinale. Le trou central est ouvert vers l'avant. Dans ce cas, l'absorbeur de choc 11 présente en regard du fût 49 une cheminée 53 d'orientation longitudinale, placée dans le prolongement du fût 49. La cheminée 53 traverse de part en part l'absorbeur de chocs et est ouverte à ses deux extrémités. Elle permet l'introduction à travers l'absorbeur de chocs d'une tige filetée solidaire de l'anneau d'arrimage, et le vissage de ladite tige filetée dans le trou taraudé 51.

La face avant décrite ci-dessus présente de multiples avantages.

Du fait que chaque platine comporte une pluralité de cavités internes, chaque cavité interne étant délimitée perpendiculairement à la direction verticale par une paroi périphérique continue et entièrement fermée, les platines sont à la fois rigides et particulièrement légères. Elles peuvent ainsi assurer une double fonction : assurer la liaison entre les voies hautes et basses d'absorption de chocs du véhicule, et supporter les absorbeurs de chocs « moyennes vitesses ». Les platines remplacent ainsi les piliers utilisés dans les véhicules de l'état de la technique pour solidariser les voies hautes et basses et fermer la structure de caisse. Le fait que le même élément de structure, à savoir la platine, assure la fonction de pilier et la fonction de support d'absorbeur de chocs « moyennes vitesses » permet de réduire la masse totale de la face avant du véhicule, d'en simplifier la structure, de limiter l'encombrement de la face avant, et de diminuer le coût de celle-ci.

Du fait de sa taille, la platine présente une surface d'appui pour l'absorbeur de chocs « moyennes vitesses » particulièrement grande, et est donc particulièrement adaptée aux absorbeurs de chocs de grande dimension. Les platines sont suffisamment rigides pour stabiliser la structure du véhicule lorsque celui-ci est soumis à un choc moyenne vitesse, qui génère un effort dans la structure du véhicule compris entre 80 et 120 kN. La platine permet, pour ce type de choc, de maintenir le longeron principal et le longeron inférieur sensiblement en position l'un par rapport à l'autre, et également d'empêcher le flambement, le déversement ou la détérioration de ces longerons.

Les platines sont également suffisamment rigides pour servir de support aux absorbeurs de chocs à moyenne vitesse.

Les platines peuvent être réalisées de manière particulièrement commode par extrusion. Quand les platines sont réalisées en aluminium, elles sont à la fois légères, rigides, et faciles à réaliser par extrusion.

Le fait que la platine comporte une âme centrale et deux retours solidaires de l'âme centrale, contribuent à augmenter la rigidité de la platine. En particulier, ceci contribue à augmenter l'inertie de la platine en flexion autour de l'axe transversal.

De préférence, les retours s'étendent vers l'arrière du véhicule à partir de l'âme centrale, de manière à ne pas perturber le travail des absorbeurs de chocs. Ceci permet de conférer à la platine une forme de U ouvert vers l'arrière du véhicule, et ainsi de définir une rainure de réception du longeron principal et du longeron inférieur permettant de créer une liaison particulièrement rigide entre les longerons et la platine. Le fait que les retours comportent des cavités internes permet de rendre ceux-ci particulièrement rigides.

La liaison entre les longerons et la platine est rendue également particulièrement rigide par le fait que les retours sont eux aussi fixés directement aux longerons, en plus de la liaison existant entre l'âme centrale et la bride du longeron.

La face avant décrite ci-dessus peut présenter de multiples variantes.

Le nombre et la forme des cavités internes ménagées dans la platine peut être différent de ce qui est représenté sur les figures 2 à 4.

Dans une variante de réalisation non préférée, la platine peut ne pas comporter de retour, et comporter seulement l'âme centrale plaquée contre la les longerons.

La platine n'est pas nécessairement venue d'extrusion. Elle peut être obtenue par toute autre technique adaptée, par exemple par moulage, par hydroformage etc. Elle n'est pas nécessairement en aluminium, mais peut être réalisée en tout autre métal adapté, par exemple en magnésium.

L'absorbeur de chocs ne comporte par nécessairement un bloc de section trapézoïdale. Ce bloc peut présenter toutes sortes de sections : rectangulaire, carrée etc.

L'invention s'applique également à des faces avant ayant des architectures différentes de celle de la figure 1.

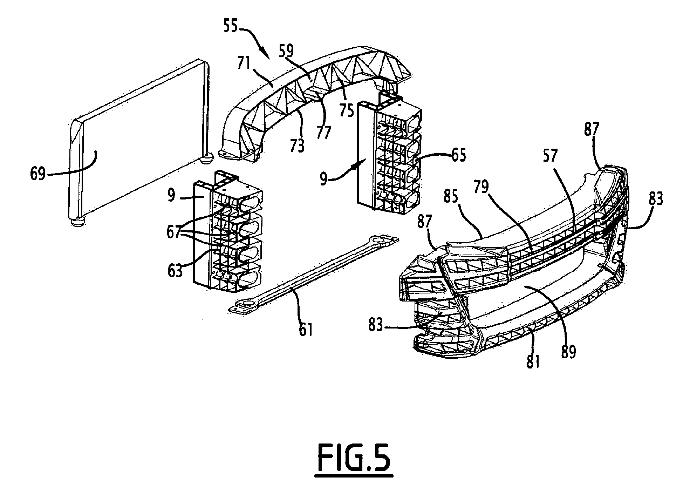

Par exemple, la face avant peut être du type décrit dans la demande française déposée sous le numéro FR 0901440 et illustré sur la figure 5.

La face avant comprend essentiellement un cadre structurel 55 et un bouclier 57. Pour des raisons de simplicité, la structure du bouclier 4 n'a pas été entièrement représentée sur la Fig. 1.

Le cadre structurel 55 participe à la rigidité de la caisse du véhicule. Il comprend une traverse supérieure 59, une traverse inférieure 61, et des montants verticaux droit 63 et gauche 65.

Le montant vertical droit 63, respectivement le montant vertical gauche 65, du cadre structurel est constitué par une pluralité d'éléments déformables 67. Dans le mode de réalisation envisagé, quatre éléments déformables 67 sont superposés selon la direction verticale. Dans une variante de réalisation, un montant vertical est constitué par une rampe déformable continue. Un élément ou une rampe déformable est une structure sensiblement parallélépipédique apte à absorber, en s'écrasant selon son épaisseur, une fraction de l'énergie d'un choc.

La face arrière d'un montant vertical 63, 65 vient en appui sur l'essentiel de la surface d'une platine métallique 9 de grande hauteur du type décrit ci-dessus reliant, d'un même côté du véhicule, les extrémités des longerons principal et inférieur.

La traverse inférieure 61 du cadre structurel relie les deux éléments d'absorption 67 les plus bas de chacun des montants verticaux 63 et 65. La traverse inférieure 61 a une section de forme générale rectangulaire. La portion centrale de la traverse inférieure 8 est amincie selon la direction verticale, de sorte que sa face supérieure présente un logement de réception d'un ensemble de refroidissement, indiqué de manière générale par la référence 69. L'ensemble de refroidissement 69 comporte par exemple un groupe motoventilateur et un radiateur. La traverse inférieure 61 est avantageusement réalisée en matière plastique. En variante, cette traverse peut être métallique, et liée directement à l'extrémité inférieure de chacune des prolonges de berceau, de manière à accroître sa participation à la cohésion et à la rigidité de la caisse, en situation de roulage ou de crash.

La traverse supérieure 59 du cadre structurel relie les deux éléments déformables 67 les plus hauts des montants verticaux droit 63 et gauche 65. La traverse supérieure 59 est de forme générale en arche. La traverse supérieure 59, en tant que poutre à treillis, comporte une membrure supérieure 71 et une membrure inférieure 73 reliées entre elles par des nervures de renfort 75. Les nervures de renfort sont disposées de manière à former des caissons intérieurs triangulaires.

La membrure supérieure 71 de la traverse supérieure est adaptée pour coopérer avec un élément de carrosserie du véhicule et en particulier avec un capot de celui-ci.

Une portion médiane de la traverse supérieure présente un logement 77 de réception de moyens de fermeture du capot destinés à coopérer avec des moyens de fermeture conjugués prévus sur le capot.

Des moyens de maintien de l'ensemble de refroidissement sont prévus sur la membrure inférieure 73 de la traverse supérieure.

Le bouclier 57 est disposé contre le cadre structurel 55 vers l'avant de celui-ci. Ce bouclier 57 est par exemple une pièce monobloc réalisée en matière plastique. Le bouclier 57 comprend une traverse supérieure 79 et une traverse inférieure 81 s'étendant sensiblement horizontalement et transversalement et reliées entre elles à chacune de leurs extrémités par une poutre de liaison sensiblement verticale 83.

La forme générale du bouclier est conformée pour épouser la forme d'une peau de bouclier (non représentée) et destinée à être fixée sur la face avant du bouclier.

La traverse supérieure 79 est disposée sensiblement au droit des éléments d'absorption 67 les plus haut des montants du cadre et s'étend entre ces éléments 67.

La traverse inférieure 81 est disposée sensiblement au droit des éléments d'absorption 67 les plus bas des montants du cadre et s'étend entre ces éléments 67.

La face arrière 85 du bouclier comprend des zones 87 de réception des montants 63 et 65. Ces zones 87 constituent deux larges rails verticaux et sont disposées sensiblement derrière les poutres de liaison verticales 83.

Une ouverture centrale est prévue entre les traverses 79 et 81 et les poutres de liaison 83 de sorte à laisser passer l'air vers le châssis du véhicule automobile.

Les traverses supérieures 79 et inférieures 81, et les poutres de liaison 83, comprennent une pluralité de nervures (non représentées) s'étendant en hauteur et agencées pour former des alvéoles s'étendant entre la face avant et la face arrière du bouclier 57.

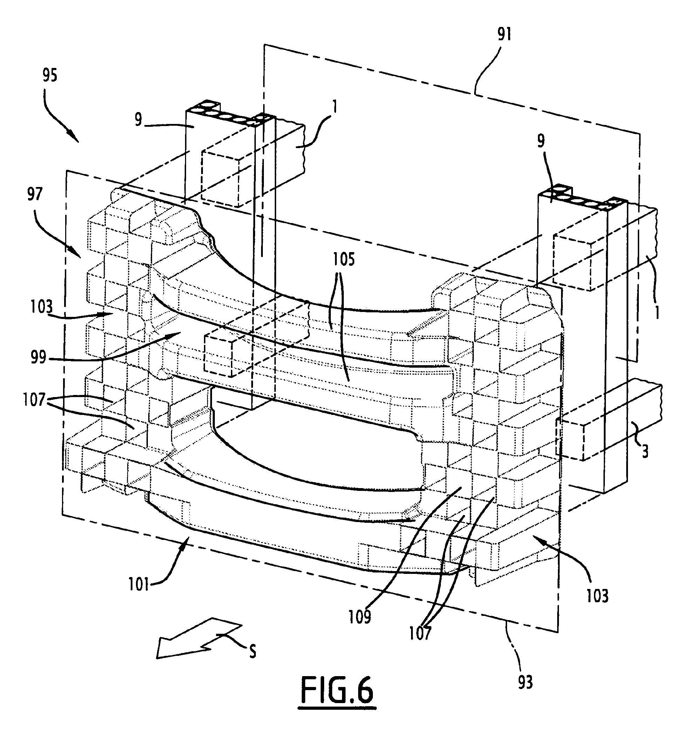

La face avant peut également être du type décrit dans la demande de brevet déposée sous le numéro FR 09 01438 et représentée sur la figure 6.

La face avant représentée sur la figure 6 comprend un cadre de support 91 symbolisé de façon schématique par un rectangle en traits mixtes portant des organes fonctionnels d'un système de refroidissement du groupe motopropulseur du véhicule et/ou d'un système de climatisation, tel qu'un ou plusieurs radiateurs ou un groupe motoventilateur.

Le cadre 91 est fixé aux longerons principaux 1 et à des longerons d'aile supportant les ailes de la carrosserie, et situés au-dessus des longerons principaux.

Le cadre 91 se situe en retrait vers l'arrière des extrémités avant des longerons principaux 1 et inférieurs 3.

La face avant comprend également une paire de platines 9 de fixation disposées aux extrémités avant des longerons inférieurs 3. Chaque platine 9 relie l'extrémité avant d'un longeron principal 1 à celle du longeron inférieur 3 adjacent situé du même côté.

Les platines 9 sont des platines de grande hauteur, du type décrit plus haut en référence aux figures 1 à 4.

La face avant comporte également une peau de pare-chocs 93 et un bouclier 95.

Le bouclier 95 est disposé entre la peau 93, par laquelle il est recouvert, et les platines 9. Il a pour fonction d'absorber l'énergie de chocs à petite vitesse et de chocs à moyenne vitesse (Danner) de façon à préserver le châssis, et de protéger un piéton en cas de choc piéton.

Le bouclier 95 est disposé aux extrémités avant des longerons principaux 1 et inférieurs 3 en étant fixé en appui longitudinal contre les platines 9. Le bouclier 95 est disposé devant le cadre 91 de façon à le protéger, ainsi que les organes fonctionnels qu'il porte.

Le bouclier 95 comprend un cadre 97 monobloc formé d'une poutre pare-chocs supérieure 99 située à hauteur des longerons principaux 1, d'une poutre pare-chocs inférieure 101 située à hauteur des longerons inférieurs 3 et de deux montants 103 reliant les poutres pare-chocs 99, 101 entre elles.

Les poutres pare-chocs 99 et 101 s'étendent sensiblement transversalement et horizontalement. Elles sont espacées verticalement l'une de l'autre. Les montants 103 s'étendent sensiblement verticalement entre les poutres pare-chocs 99,101.

Les poutres pare-chocs 99, 101 ont pour fonction de canaliser l'énergie d'un choc vers les montants 103 en cas de collision. La poutre pare-chocs inférieure 101, ou « poutre pare-chocs piéton », a également pour fonction de protéger la jambe de piéton en cas de choc piéton.

La poutre pare-chocs inférieure 101 est disposée pour venir impacter la jambe d'un piéton en dessous du genou, tandis que la poutre pare-chocs supérieure 99 est prévue pour venir impacter la jambe d'un piéton sensiblement au droit du genou.

Dans cet exemple, la poutre pare-chocs supérieure 99 est double et comprend au moins deux membrures 105 horizontales parallèles espacées verticalement. Chaque membrure 105 possède une section en U ouverte horizontalement vers l'arrière. Les membrures 105 augmentent l'inertie de la poutre pare-chocs supérieure en flexion et en torsion.

En option, chaque membrure 105 comprend des nervures verticales longitudinales intérieures de rigidification.

La poutre pare-chocs inférieure 101 possède une section en U ouverte horizontalement vers l'arrière.

En option, la poutre pare-chocs inférieure 101 comprend des nervures intérieures de rigidification.

Les montants 103 du bouclier 95 sont prévus pour faire office d'absorbeur d'énergie entre la peau 93 et les platines 9, et pour absorber l'énergie d'un choc sur le bouclier 95 à petite vitesse ou à moyenne vitesse (Danner).

Ainsi, les montants 103 sont aptes à être fixés directement en appui rigide contre les platines 9, sans interposer des absorbeurs de choc additionnels rapportés entre les montants et les platines.

Chaque montant 103 présente une structure alvéolaire comprenant des alvéoles 107, 109 s'étendant longitudinalement entre une face arrière et une face avant des montants 103.

Chaque montant 103 comprend des alvéoles borgnes inversées comprenant des premières alvéoles 107 borgnes, fermées du côté de la face arrière et ouvertes du côté de la face avant, et des deuxièmes alvéoles 109 borgnes ouvertes du côté de la face arrière et fermées du côté de la face avant. Les premières alvéoles 107 et les deuxièmes alvéoles 109 sont disposées en quinconce (ou damier).

Chaque montant 103 est fixé directement sur la platine 9 correspondante, en contact et en appui longitudinal rigide contre sur la platine 9. Chaque montant 103 recouvre la majeure partie de la surface d'appui offerte par la platine 9 correspondante.

Chaque montant 103 est fixé sur la platine 9 correspondante par vissage ou par collage.

## Revendications

1. Face avant de véhicule automobile, la face avant (5) comprenant deux platines (9) et deux absorbeurs de chocs « moyennes vitesses » (11) fixés aux platines (9), chaque platine (9) présentant verticalement une hauteur telle que des parties d'extrémité supérieure et inférieure de la platine (9) sont susceptibles d'être conjointement situées verticalement au niveau d'extrémités avant respectivement d'un longeron principal (1) et d'un longeron inférieur (3) du véhicule, les parties d'extrémité supérieure et inférieure de la platine (9) étant susceptibles d'être conjointement rigidement fixées audit longeron principal (1) et audit longeron inférieur (3), **caractérisée en ce que** chaque platine (9) comporte une pluralité de cavités internes (33), chaque cavité interne (33) étant délimitée perpendiculairement à la direction verticale par une paroi périphérique (35) continue et entièrement fermée.

2. Face avant selon la revendication 1, **caractérisée en ce que** chaque cavité interne (33) s'étend sur toute la hauteur de la platine (9).

3. Face avant selon la revendication 2, **caractérisée en ce que** chaque cavité interne (33) est ouverte vers le haut et/ou vers le bas.

4. Face avant selon l'une quelconque des revendications précédentes, **caractérisée en ce que** chaque platine (9) est venue d'extrusion.

5. Face avant selon l'une quelconque des revendications précédentes, **caractérisée en ce que** chaque platine (9) est en aluminium extrudé.

6. Face avant selon l'une quelconque des revendications précédentes, **caractérisée en ce que** chaque platine (9) comporte une âme centrale (21) et deux retours (23) verticaux parallèles entre eux et solidaires de l'âme centrale (21), les deux retours (23) délimitant entre eux une rainure (29) de réception du longeron principal (1) et du longeron inférieur (3) s'étendant sur toute la hauteur de la platine (9).

7. Face avant selon la revendication 6, **caractérisée en ce que** l'âme centrale (21) présente à l'opposé des deux retours (23) une surface d'appui (25) des absorbeurs de chocs « moyennes vitesses » (11), et entre les deux retours (23) une surface d'appui (27) du longeron principal (1) et du longeron inférieur (3).

8. Face avant selon la revendication 6 ou 7, **caractérisée en ce que** certaines des cavités internes (33) sont ménagées dans les retours (23).

9. Face avant selon l'une quelconque des revendications 6 à 8, **caractérisée en ce qu'**elle comprend des organes de fixation des retours (23) directement aux longerons principaux (1).

10. Face avant selon l'une quelconque des revendications précédentes, **caractérisée en ce que** chaque platine (9) présente vers l'avant une surface (25) d'appui de l'absorbeur de chocs (11) correspondant.

11. Face avant selon l'une quelconque des revendications précédentes, **caractérisée en ce que** chaque cavité interne (33) considérée en section perpendiculairement à la direction verticale, présente une section comprise entre 400 et 1600 mm2.

12. Face avant selon l'une quelconque des revendications précédentes, **caractérisée en ce que** chaque platine (9) présente une épaisseur comprise entre 12 et 35 mm.

13. Face avant selon l'une quelconque des revendications précédentes, **caractérisée en ce que** chaque absorbeur de chocs (11) est adapté pour amortir un choc générant un effort compris entre 80 et 120 kN dans la structure du véhicule.

14. Face avant selon l'une quelconque des revendications précédentes, **caractérisée en ce qu'**elle comprend une poutre de pare-chocs (13), les absorbeurs de chocs (11) étant interposés entre la poutre de pare-chocs (13) et les platines (9).

15. Véhicule automobile comprenant des longerons principaux (1), des longerons inférieurs (3) situés sous les longerons principaux (1), et une face avant (5) selon l'une quelconque des revendications précédentes, les platines (9) de la face avant (5) étant chacune rigidement fixée à l'un des longerons principaux (1) et à l'un des longerons inférieurs (3).

## Patentansprüche

1. Kraftfahrzeugvorderbau, wobei der Vorderbau (5) zwei Halteplatten (9) und zwei Stoßdämpfer für "mittlere Geschwindigkeiten" (11) umfasst, die an den Halteplatten (9) befestigt sind, wobei jede Halteplatte (9) vertikal eine Höhe aufweist, derart, dass Teile von oberem und unterem Ende der Halteplatte (9) dazu ausgelegt sind, gemeinsam vertikal an den Enden jeweils vor einem Hauptlängsträger (1) und einem unteren Längsträger (3) des Fahrzeugs angeordnet zu sein, wobei die Teile von oberem und unterem Ende der Halteplatte (9) dazu ausgelegt sind, gemeinsam starr an dem Hauptlängsträger (1) und an dem unteren Längsträger (3) befestigt zu werden, **dadurch gekennzeichnet, dass** jede Halteplatte (9) eine Vielzahl von inneren Hohlräumen (33) umfasst, wobei jeder innere Hohlraum (33) senkrecht zu der vertikalen Richtung von einer kontinuierlichen und vollkommen geschlossenen peripheren Wand (35) begrenzt ist.

2. Vorderbau nach Anspruch 1, **dadurch gekennzeichnet, dass** sich jeder innere Hohlraum (33) über die gesamte Höhe der Halteplatte (9) erstreckt.

3. Vorderbau nach Anspruch 2, **dadurch gekennzeichnet, dass** jeder innere Hohlraum (33) nach oben und/oder unten geöffnet ist.

4. Vorderbau nach einem der vorhergehenden Ansprüche, **dadurch gekennzeichnet, dass** jede Halteplatte (9) durch Extrusion entsteht.

5. Vorderbau nach einem der vorhergehenden Ansprüche, **dadurch gekennzeichnet, dass** jede Halteplatte (9) aus extrudiertem Aluminium besteht.

6. Vorderbau nach einem der vorhergehenden Ansprüche, **dadurch gekennzeichnet, dass** jede Halteplatte (9) einen mittleren Steg (21) und zwei vertikale zueinander parallele und aus einem Stück mit dem Mittelsteg (21) bestehende Rückläufe (23) umfasst, wobei die beiden Rückläufe (23) zwischen sich eine Aufnahmenut (29) des Hauptlängsträgers (1) und des unteren Längsträgers (3) begrenzen, die sich über die gesamte Höhe der Halteplatte (9) erstreckt.

7. Vorderbau nach einem Anspruch 6, **dadurch gekennzeichnet, dass** der mittlere Steg (21) gegenüber den beiden Rückläufen (23) eine Auflagefläche (25) der Stoßdämpfer für "mittlere Geschwindigkeiten" (11) und zwischen den beiden Rückläufen (23) eine Auflagefläche (27) des Hauptlängsträgers (1) und des unteren Längsträgers (3) aufweist.

8. Vorderbau nach Anspruch 6 oder 7, **dadurch gekennzeichnet, dass** die inneren Hohlräume (33) in die Rückläufe (23) eingearbeitet sind.

9. Vorderbau nach einem der Ansprüche 6 bis 8, **dadurch gekennzeichnet, dass** er Befestigungseinrichtungen der Rückläufe (23) direkt an den Hauptlängsträgern (1) umfasst.

10. Vorderbau nach einem der vorhergehenden Ansprüche, **dadurch gekennzeichnet, dass** jede Halteplatte (9) nach vorne eine Auflagefläche (25) des entsprechenden Stoßdämpfers (11) aufweist.

11. Vorderbau nach einem der vorhergehenden Ansprüche, **dadurch gekennzeichnet, dass** jeder innere Hohlraum (33) betrachtet im Querschnitt senkrecht zur vertikalen Richtung einen Querschnitt zwischen 400 und 1600 mm² aufweist.

12. Vorderbau nach einem der vorhergehenden Ansprüche, **dadurch gekennzeichnet, dass** jede Halteplatte (9) eine Dicke zwischen 12 und 35 mm aufweist.

13. Vorderbau nach einem der vorhergehenden Ansprüche, **dadurch gekennzeichnet, dass** jeder Stoßdämpfer (11) dazu ausgelegt ist, einen Aufprall auszugleichen, der eine Belastung zwischen 80 und 120 kN in der Struktur des Fahrzeugs erzeugt.

14. Vorderbau nach einem der vorhergehenden Ansprüche, **dadurch gekennzeichnet, dass** er einen Stoßstangenträger (13) umfasst, wobei die Stoßdämpfer (11) zwischen dem Stoßstangenträger (13) und den Halteplatten (9) eingesetzt sind.

15. Kraftfahrzeug umfassend Hauptlängsträger (1), untere Längsträger (3), die unter den Hauptlängsträgern (1) liegen, und einen Vorderbau (5) nach einem der vorhergehenden Ansprüche, wobei die Halteplatten (9) des Vorderbaus jeweils starr an einem der Hauptlängsträger (1) und an einem der unteren Längsträger (3), befestigt sind.

## Claims

1. Front end of a motor vehicle, the front end (5) comprising two panels (9) and two "average speed" shock absorbers (11) fastened to the panels (9), wherein each panel (9) is vertically of such a height that the upper and lower end sections of the panel (9) can jointly be located vertically at the level of front ends of a main beam (1) and a bottom beam (3) respectively of the vehicle, wherein the upper and lower end sections of the panel (9) can jointly be fastened rigidly to said main beam (1) and said bottom beam (3), **characterised in that** each panel (9) comprises a plurality of internal cavities (33), each internal cavity (33) being delimited perpendicularly to the vertical direction by a continuous and fully closed peripheral wall (35).

2. Front end according to claim 1, **characterised in that** each internal cavity (33) extends over the entire height of the panel (9).

3. Front end according to claim 2, **characterised in that** each internal cavity (33) is open to the top and/or to the bottom.

4. Front end according to any one of the preceding claims, **characterised in that** each panel (9) is formed by extrusion.

5. Front end according to any one of the preceding claims, **characterised in that** each panel (9) is made from extruded aluminium.

6. Front end according to any one of the preceding claims, **characterised in that** each panel (9) comprises a central core (21) and two vertical returns (23) parallel to one another and integral to the central core (21), wherein the two returns (23) delimit a groove (29) between them to receive the main beam (1) and the bottom beam (3) that extends over the entire height of the panel (9).

7. Front end according to claim 6, **characterised in that** the central core (21) has a supporting surface (25) for the "average speed" shock absorbers (11) opposite the two returns (23) and a supporting surface (27) for the main beam (1) and the bottom beam (3) between the two returns (23).

8. Front end according to claim 6 or 7, **characterised in that** some of the internal cavities (33) are arranged in the returns (23).

9. Front end according to any one of claims 6 to 8, **characterised in that** it comprises elements for fastening the returns (23) directly to the main beams (1).

10. Front end according to any one of the preceding claims, **characterised in that** towards the front each panel (9) has a corresponding supporting surface (25) for the shock absorber (11).

11. Front end according to any one of the preceding claims, **characterised in that** viewed in cross-section perpendicularly to the vertical direction, each internal cavity (33) has a cross-section in the range of between 400 and 100 m².

12. Front end according to any one of the preceding claims, **characterised in that** each panel (9) has a thickness in the range of between 12 and 35 mm.

13. Front end according to any one of the preceding claims, **characterised in that** each shock absorber (11) is suitable for absorbing an impact that generates a force in the range of between 80 and 120 kN in the structure of the vehicle.

14. Front end according to any one of the preceding claims, **characterised in that** it comprises a bumper bar (13), wherein the shock absorbers (11) are interposed between the bumper bar (13) and the panels (9).

15. Motor vehicle comprising main beams (1), bottom beams (3) located below the main beams (1) and a front end (5) according to any one of the preceding claims, wherein the panels (9) of the front end (5) are each rigidly fastened to one of the main beams (1) and one of the bottom beams (3).
